# EUROPÄISCHE PATENTSCHRIFT

(11) **EP 0 592 943 B1**
(45) Veröffentlichungstag und Bekanntmachung des Hinweises auf die Patenterteilung: **11.12.1996**
(21) Anmeldenummer: 93116211.9
(22) Anmeldetag: 07.10.1993
(51) Int. Cl.: A47J 31/36, F04B 53/10, F04B 15/04, F04B 53/08

(54) **Kaffeemaschine**
Coffee-making machine
Machine à café

(30) Priorität: 15.10.1992 DE 4234746
(43) Veröffentlichungstag der Anmeldung: 20.04.1994
(73) Patentinhaber: Braun Aktiengesellschaft, 60326 Frankfurt am Main (DE)
(72) Erfinder: Müller, Roland, D-63303 Dreieich (DE); Hufnagl, Walter, D-65843 Sulzbach (DE)

(56) Entgegenhaltungen:
- EP-A- 0 443 665
- EP-A- 0 531 699
- US-A- 1 774 980
- US-A- 3 039 488
- US-A- 3 238 887
- US-A- 3 373 695
- US-A- 5 171 136

## Beschreibung

Die Erfindung betrifft eine Haushaltsespressomaschine mit einer Heizeinrichtung zum Erhitzen von Wasser auf die für die Herstellung eines Kaffeegetränks notwendige Temperatur und mit einer elektrisch angetriebenen Pumpe zum Fördern von Wasser_{,} in deren Gehäuse eine Bohrung ausgebildet ist, in der ein Arbeitskolben hin- und herbewegt wird und durch seinen Hub eine Arbeitskammer festlegt und mit einem Saug- und einem Druckventil, die jeweils in Schließrichtung einen federbelasteten Ventilschließkörper enthalten, wobei das Saugventil durch Unterdruck und das Druckventil durch Überdruck in der Arbeitskammer geöffnet werden und wobei die Herstellung des Kaffeegetränks dadurch erfolgt, daß heißes Wasser von der Pumpe über das Saugventil angesaugt und über das Druckventil unter Druck einer mit Kaffeemehl befüllbaren Brühkammer zugeführt wird, aus der es nach Extraktion abfließt.

Eine derartige Haushaltsespressomaschine ist bereits seit 1989 im Handel erhältlich und wird unter der Bezeichnung "Coffee-Profi" von der Firma Form+Funktion, D-6900 Heidelberg, vertrieben. Diese Haushaltsespressomaschine weist einen temperaturgeregelten Thermoblock auf, in dem ein Wasserkanal ausgebildet ist, der von einer im Thermoblock eingegossenen Heizeinrichtung beheizt wird. Zwischen dem Thermoblock und einem im Gehäuse integrierten Wassertank befindet sich eine von einem Magnetfeld angetriebene Kolbenpumpe, eine sogenannte Schwingankerpumpe, die das vom Wassertank ausfließende Wasser ansaugt, dieses unter Druck setzt und anschließend durch den im Thermoblock ausgebildeten Wasserkanal pumpt. Im Wasserkanal des Thermoblocks wird das Wasser durch die Heizeinrichtung erhitzt und schließlich einem mit Kaffeemehl befüllbaren Brühkopf unter Druck zugeführt. Nach Extraktion des Kaffeemehls fließt das fertige Brühgetränk in ein unterhalb des Brühkopfes abstellbares Gefäß.

Bei einem derartigen Aufbau einer Espressomaschine ist es als weniger vorteilhaft anzusehen, daß die vom Thermoblock zum Brühen von Espresso erforderliche Wassertemperatur kaum richtig eingehalten werden kann, da der Temperaturregler nur indirekt über die Temperatur des Thermoblocks die Temperatur des Wassers steuert. Dies führt bei der Zubereitung von nur einer Tasse Kaffee einerseits dazu, daß die Temperatur des aus dem Thermoblock zum Brühkopf fließenden Wassers meist zu hoch ist. Die Folge ist, daß das Kaffeemehl "verbrennt", d.h., es werden bereits schon zu Anfang des Brühvorganges Im Wasser Bitterstoffe und Öle gelöst, die letztendlich den Geschmack des Kaffees nachteilig beeinträchtigen.

Wenn andererseits mehrere Tassen Kaffee zubereitet werden sollen, so kann das durch den Thermoblock fließende und dort erhitzte Wasser von der Heizeinrichtung gar nicht so schnell auf die erforderliche Temperatur aufgewärmt werden, da immer eine gewisse Zeit verstreicht, bis der Thermoblock durch die Heizeinrichtung wieder so aufgeheizt ist, daß dieser wieder genügend Wärme dem Wasser zuführen kann. Die Folge ist, daß das erhitzte Wasser mit zu niedriger Temperatur in den Brühkopf einfließt, so daß nicht alle für einen Kaffee erforderlichen Geschmacks- und Aromastoffe aus dem Kaffeemehl extrahiert werden können. Das Resultat ist dann ein zu kaltes und wenig aromareiches Getränk.

Des weiteren ist eine von der Anmelderin selbst vertriebene Haushaltsespressomaschine mit der Bezeichnung "Braun Espresso Master professional", Typ E 400 T, bekannt geworden, bei der anstelle des Thermoblocks ein mit einer Heizeinrichtung versehener und gegenüber der Atmosphäre geschlossener Boiler zum Erhitzen von Wasser verwendet wird, dem eine Schwingankerpumpe vorgeschaltet ist. Die Schwingankerpumpe saugt kaltes Wasser aus einem Wassertank an, setzt es unter Druck und pumpt es in den Boiler, wo es erhitzt und anschließend einem mit Kaffeemehl gefüllten Brühkopf zugeführt wird. Zwar kann bei dieser Espressomaschine die Temperatur des Wassers verhältnismäßig genau eingehalten werden, wenn nur eine Tasse Kaffee verlangt wird, sobald aber mehrere Tassen Kaffee hintereinander aufgebrüht werden sollen, ergibt sich auch hier der Nachteil, daß das in den Boiler einfließende Kaltwasser zu langsam erhitzt bzw. sich zu schnell mit dem im Boiler befindlichen heißen Wasser vermischt, so daß dem Brühkopf dann wieder letztendlich zu kaltes Wasser zum Aufbrühen von Kaffee zugeführt wird.

Weiterhin ist aus der US-A-1,774,980 eine Kaffeemaschine bekannt, bei der heißes Wasser von einer Kolbenpumpe angesaugt und einer mit Kaffeemehl befüllbaren Brühkammer zugeführt wird. Aufgrund der Herstellung von großen Mengen an Kaffee (ca. 20 bis 40 Liter) ist diese Kaffeemaschine nicht geeignet, ein Espressogetränk herzustellen.

Des weiteren ist aus der EP-A-0 531 699 eine der eingangs beschriebenen Espressomaschine bekannt, bei der das gesamte für die Kaffeeherstellung vorgesehene Wasser in einem offenen Kessel von einer Heizeinrichtung erhitzt und von einer Kolbenpumpe aus dem Kessel angesaugt und unter Druck der mit Kaffeemehl befüllten Brühkammer zugeführt wird. Obgleich bei dieser Espressomaschine der Brühvorgang mit Brühwasser definierter Temperatur durchgeführt werden kann, hat sich herausgestellt, daß bei der Verwendung von Kolbenpumpen nur erhitztes Wasser unterhalb der für die Kaffeeherstellung optimalen Temperatur, nämlich 93° C bis 97° C, gepumpt werden kann. Grund dafür ist, daß oberhalb einer bestimmten Temperatur des zugepumpten Wassers die Förderleistung der Pumpe geradezu einbricht.

Der Erfindung liegt daher die Aufgabe zugrunde, eine Haushaltsespressomaschine zu schaffen, bei der der Zutat unabhängig davon, wie diese im Siebkorb verdichtet wurde und welchen Mahlgrad sie aufweist, auch Wasser mit für die Espressoherstellung optimaler Temperatur ohne deutlichen Abfall der Pumpenleistung gepumpt werden kann.

Diese Aufgabe wird erfindungsgemäß dadurch gelöst, daß des heiße Wasser von der Heizeinrichtung bis auf die für die Herstellung des Espressogetränks optimale Temperatur von 93° C bis 97° C, vorzugsweise zwischen 95° C und 97° C, aufgeheizt wird und daß das Saugventil als Tellerventil ausgebildet ist. Durch die erfindungsgemäße Kaffeemaschine wird erreicht, daß die Pumpe erstmals heißes Wasser ansaugt und direkt dem Brühkopf zuführt, wo dieses dann genau die für die Herstellung eines Espressogetränks notwendige Temperatur aufweist, so daß einerseits das Kaffeemehl optimal extrahiert und andererseits keine unerwünschten Begleitstoffe in den Espresso gelangen, die zu einer Geschmacksverminderung des Espresso führen würden. Das Ansaugen von heißem Wasser, das genau die Temperatur hat, die für die Herstellung eines Espressogetränks notwendig ist, wird allerdings nur durch das als Tellerventil ausgebildete Saugventil erreicht, da dieses bereits bei geringem Unterdruck in der Arbeitskammer öffnet und somit unter Vermeidung von Dampfblasenbildung in der Arbeitskammer stets eine gleiche Fördermenge bei gleicher Kolbengeschwindigkeit liefert. Da die Pumpe heißes Wasser ansaugt, kann dieses beispielsweise bereits in einer großen Menge in einem Kessel genau auf Brühtemperatur gehalten werden, so daß wahrend des Brühvorganges ein Auf- bzw. Nachheizen des Wassers nicht nötig ist, was letztendlich zu den unerwünschten Temperaturschwankungen des Wasser führen würde. Die Erfindung läßt sich aber dennoch auch bei Espressomaschinen mit einem Thermoblock oder mit einem Druckboiler anwenden.

Durch die Ausbildung des Saugventils als Tellerventil ist es möglich, den Ventilschließkörper des Saugventils mit einer sehr geringen Federkraft zu beaufschlagen, weshalb zum Betätigen des Saugventiles lediglich geringe Druckdifferenzen am Ventilschließkörper anliegen müssen. Da die Ventilgeometrie nun unabhängig von der Größe des Arbeitskolbens ist, können relativ große Wirk- und Einlaßquerschnitte am Ventilkörper gewählt werden. die den Öffnungs- und Ansaugdruck noch weiter herabsetzen. Dadurch ergibt sich eine Kolbenpumpe, an der keine Kavitation mehr auftritt und die geringe Laufgeräusche bei exakter Wasserförderungsmenge pro Hub verursacht. Außerdem arbeitet die Pumpe selbstsaugend, d.h., durch Erzeugen von Vakuum am ersten Ventilschließkörper wird das Wasser angesaugt, wenn die Heißwasserzubereitung unterhalb der Pumpe angeordnet ist.

Eine bevorzugte Ausführungsform der Erfindung sieht vor, daß das Tellerventil auf seiner vom Arbeitsraum abgewandten Seite einen Ventilschaft aufweist, der in eine Axialführung eingreift und daß das Tellerventil einen Ventilschließkörper aufweist, der in der Arbeitskammer ausgebildet ist. Auf diese Weise werden aufgrund des verhältnismäßig groß wählbaren Einlaßquerschnittes die Strömungsverluste verringert, so daß der im Siebkorbträger befindlichen Zutat das pro Hub in der Arbeitskammer geförderte heiße Wasser ohne nennenswerte Temperaturverluste vollständig zugeführt wird. Zum anderen ergibt sich eine raumsparende Pumpe bei geringem Gewicht und dennoch zuverlässiger Funktionsweise auch bei höheren Drücken von ca. 15 bis 20 bar, die leicht in der Kaffeemaschine integriert werden kann. Aufgrund der langen zentralen Führung des Ventilschließkörpers außerhalb der Arbeitskammer wird das Tellerventil relativ genau an seinen Dichtsitz herangeführt bzw. dort zentriert. Durch die Anordnung des Ventilschaftes in der Einlaßbohrung wird dieser vom heißen Wasser umströmt und daher stets geschmiert, was unter anderem auch zu einer im Betrieb geräuscharmen Espressomaschine führt.

Eine besonders montagefreundliche und kompakte Ausführung nach einer Weiterbildung der Erfindung sieht vor, daß an den Ventilschaft eine Abstützplatte für eine Ventilfeder befestigt ist und daß die Abstützplatte mit Durchlässen versehen ist. Hierdurch kann die Ventilfeder platzsparend zwischen der Axialführung des Tellerventils und der Abstützplatte eingespannt sein.

In Bezug auf die Funktionssicherheit der Espressomaschine ist es besonders vorteilhaft, daß das Tellerventil aus heißwasserbeständigem Kunststoff, vorzugsweise Polyamid, besteht und daß der Ventilschließkörper mit einer heißwasserbeständigen Elastomerbeschichtung, beispielsweise Silikon oder EPDM, versehen ist. Wegen der verbesserten Ventilabdichtung ist nach längerer Betriebspause der Espressomaschine oder in einem langsamen Förder- bzw. Dosierbetrieb der Pumpe ein sicherer Funktionsstart auch im Trockenlauf gegeben.

In einer Weiterbildung der Erfindung ist es vorteilhaft, daß auf dem Ventilschließkörper eine Kappe aus einem Elastomer, vorzugsweise EPDM oder NBR umhüllend aufgespannt, aufgeknöpft, aufgeklebt oder aufgeschrumpft ist. Durch die Hart-Weich-Technik ergibt sich ein bruchsicheres Tellerventil bei guter Abdichtung an der Außenfläche mit dem Ventilsitz.

Ein besonders guter Kaffee, ohne daß sich dabei bei der Förderung von heißem Wasser Dampfblasen bilden, wird dadurch erreicht, daß der Einlaßquerschnitt am geöffneten Tellerventil zu dem Auslaßquerschnitt am geöffneten Druckventil ein Verhältnis von etwa 4:1 bildet und daß der Durchmesser des Arbeitskolbens etwa 8 mm bei einem Hube von etwa 5 mm beträgt. Hierdurch wird auch bei der Erstinbetriebnahme der Pumpe im Trockenlauf ein sicheres öffnen der Ventile gewährleistet, so daß eine Entlüftung des Systems mittels anderer Entlüftungsvorrichtungen überflüssig wird.

Vorteilhaft in Bezug auf eine einfache Montage, sichere Funktion und gute Pumpenleistung ist es, wenn das Druckventil einen Ventilschließkörper aufweist, der von einer Kugel gebildet wird. Dabei kann die Kugel aus einem heißwasserbeständigen Elastomer, vorzugsweise EPDM oder Silikongummi, geformt sein. Thermoplastische Kunststoffteile und Elastomere lassen sich besonders preisgünstig herstellen und einfach in Werkzeugen ausformen und dichten, ohne noch zusätzlich mechanisch bearbeitet zu werden, aufgrund ihrer elastischen Flexibilität problemlos ab, so daß die Funktion und Haltbarkeit der Espressomaschine erheblich gesteigert wird.

In einer Weiterbildung der erfindungsgemäßen Espressomaschine wird vorgeschlagen, daß das Gehäuse der Pumpe aus Kunststoff hergestellt ist und daß die Ventilsitze durch an dem Gehäuse konzentrisch verlaufende Einschnürungen gebildet werden. Derartige Einschnürungen an einem im wesentlichen rohrförmig ausgebildeten Gehäuse lassen sich bei aus Kunststoff gespritzten Bauteilen besonders einfach herstellen, ohne daß noch zusätzliche Bearbeitungsvorgänge erfolgen müssen. Ebenso ist Kunststoff ein schlechter Wärmeleiter, so daß sich das erhitzte Wasser im Pumpbetrieb kaum abkühlt. Besonders vorteilhaft ist dabei, wenn das Gehäuse aus heißwasserbeständigem Polyacetal, vorzugsweise POM, gespritzt ist, da bei der Wahl dieser Werkstöffe sehr gleichmäßige Wandstärken eingehalten werden können. Auch bleibt nach dem Abkühlvorgang des aus diesen Werkstoffen gespritzten Gehäuses der Verzug gering, ohne daß dabei das Material merklich schwindet. Hieraus ergeben sich gute Ventilsitze mit hoher Oberflächengüte, so daß eine zusätzliche spanabhebende Bearbeitung entfallen kann.

Eine besonders kompakte und auch vormontierbare Pumpeneinheit, die dann leicht in die Espressomaschine eingebaut werden kann, wird dadurch geschaffen, daß der Arbeitskolben mit einer Pleuelstange beweglich verbunden ist, die über eine Exzenterbetätigung und ein Getriebe von einem Elektromotor angetrieben wird. Diese Antriebseinheit arbeitet wesentlich effektiver bei genauer Pumpenleistung, die unter anderem noch durch Veränderung der Drehzahl bis auf ein Minimum verringert werden kann, was insbesondere für die Herstellung von Dampf bei Espressomaschinen von besonderem Vorteil ist.

Die in den meisten Espressomaschinen für den häuslichen Bedarf eingesetzten Pumpen werden von Schwingankerpumpen gebildet und weisen einen gestuften Arbeitskolben auf, der mit einer zentralen Durchgangsbohrung versehen ist. Der Arbeitskolben ist an beiden Stirnseiten mittels zweier Hauptfedern schwingend gelagert und wird durch ein von einer Spule erzeugtes Magnetfeld zu einer hin- und hergehenden Bewegung angeregt. Eine derartige Schwingankerpumpe baut aufgrund der Hintereinanderreihung von Hauptfedern und Arbeitskolben und aufgrund der Spulenwicklung verhältnismäßig lang, ist im Durchmesser ziemlich groß und wiegt verhältnismäßig viel.

Das Ende geringeren Durchmessers des Arbeitskolbens ragt bei einer derartigen Schwingankerpumpe in die Arbeitskammer, wobei das ihm zugeordnete Ende der Durchgangsbohrung durch einen federbelasteten Ventilschließkörper des Saugventils beaufschlagt ist. Die dem Saugventil zugeordnete Ventilfeder befindet sich dabei in der Arbeitskammer und stützt sich an dem dem Arbeitskolben gegenüberliegenden Ende an der Arbeitskammer ab. Der Ventilschließkörper des Saugventils bewegt sich stets mit dem Arbeitskolben hin und her, so daß die zugeordnete Ventilfeder bei jedem Förderhub zusammengedrückt wird.

Da der Ventilschließkörper des Saugventils bei derartigen Schwingankerpumpen aus Gründen der Funktionssicherheit auch während des Saughubes nicht für längern Zeit vom Arbeitskolben abheben darf, sondern stets nur sehr kurze, sich stets wiederholende Öffnungs- und Schließbewegungen macht, ist es notwendig, daß der Ventilschließkörper auch in der Endposition eines Saughubes noch durch eine nicht unerhebliche Federkraft belastet ist. Somit ist zum Ansaugen von Wasser stets eine bestimmte und nicht unerhebliche Druckdifferenz am Ventilschließkörper notwendig. Diese in Espressomaschinen eingesetzte Schwingankerpumpe arbeitet aufgrund der Spulenanordnung mit verhältnismäßig hoher Blindleistung, so daß die Gesamtleistung (etwa 60 Watt) für den Pumpenbetrieb einer Espressomaschine auch recht hoch ist. Auch hier ergeben sich Förderleistungsverbesserungen gegenüber den herkömmlichen Schwingankerpumpen, wenn das Saugventil nach der Erfindung als Tellerventil ausgebildet ist.

Weitere vorteilhafte Merkmale sowie die Funktion der Erfindung ergeben sich aus der nachstehenden Beschreibung eines Ausführungsbeispiels einer Espressomaschine anhand der Zeichnung. Es zeigen:
- Fig. 1: eine schematische Darstellung des Aufbaus einer Espressomaschine nach der Erfindung und
- Fig. 2: einen Längsschnitt durch eine exzenterbetätigte Kolbenpumpe gemäß Fig. 1.

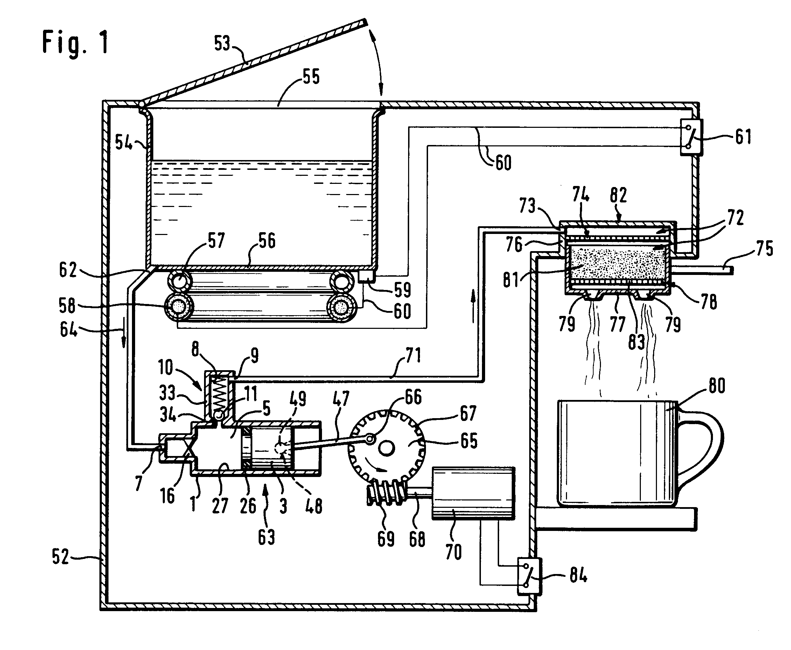

In Fig. 1 ist der für die Erfindung grundsätzliche Aufbau einer Espressomaschine schematisch dargestellt. Das Gehäuse 52 der Espressomaschine weist in seinem oberen Bereich einen nach oben aufklappbaren Deckel 53 auf, der es in seinem geöffneten Zustand erlaubt, Frischwasser über die Öffnung 55 in einen drucklosen Kessel 54 einzugießen. Der Kessel 54 wird von einem vorzugsweise aus nicht rostendem Stahl hergestellten Hohlzylinder gebildet, der mit einem Boden 56 versehen ist. Unterhalb des Bodens ist ein Dampfrohr 57 angelötet oder angeschweißt, das zur Herstellung von Dampf, insbesondere für die Zubereitung eines Cappuccinos dient. Dazu ist das Dampfrohr 57 über eine in der Zeichnung nicht dargestellte Dampfleitung mit einer aus dem Gehäuse 52 nach außen herausragenden Dampfdüse (nicht dargestellt) verbunden.

Unterhalb des Dampfrohres 57 ist weiterhin nach Fig. 1 eine elektrische Heizeinrichtung 58 befestigt, die mit dem Dampfrohr 57 verlötet, verschweißt oder verklebt Ist. Die Verbindung von Heizeinrichtung 58, Dampfrohr 57 und Boden 56 ist so ausgestaltet, daß eine gute Wärmeleitbrücke von der Heizeinrichtung 58 über das Dampfrohr 57 zum Boden 56 des Kessels 54 erreicht wird.

An der Unterseite des Bodens 56 ist ein regelbarer Thermostat 59 angebracht, der über die Heizeinrichtung 58 die Temperatur des im Kessel 54 befindlichen Wassers reguliert. Der Thermostat 59 ist über die elektrischen Leitungen 60 in Reihe mit einem von außen zugänglichen Schalter 61 geschaltet, der im geschlossenen Zustand die Stromversorgung über den Thermostaten 59 zur Heizeinrichtung 58 herstellt. Der elektrische Schalter 61 ist über eine in der Zeichnung nicht dargestellte Leitung mit dem Spannungsnetz einer elektrischen Energiequelle verbindbar.

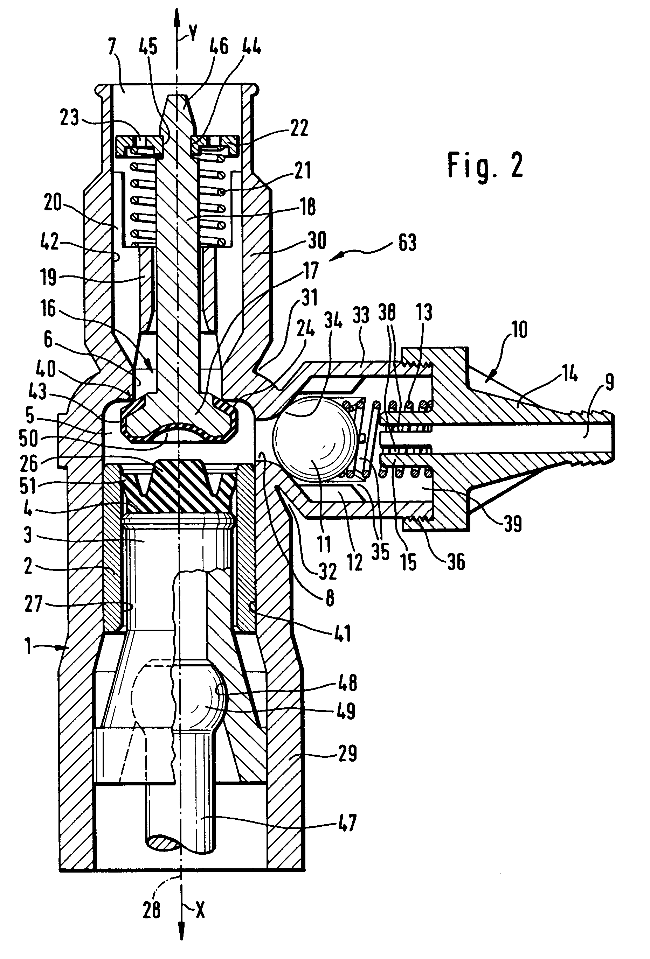

An den Boden 56 des Kessels 54 ist nach Fig. 1 eine Ausgangsleitung 62 angeschlossen, die zum Wassereinlaß 7 einer elektrisch betriebenen Kolbenpumpe 63 führt. Am Wassereinlaß 7 ist nach den Figuren 1 und 2 im Gehäuse 1 der Pumpe 63 ein als Tellerventil ausgebildetes Saugventil 16 angeordnet, das im Saugbetrieb der Pumpe 63 öffnet und Wasser in die Arbeitskammer 5 in Strömungsrichtung 64 einfließen läßt. Dem Saugventil 16 gegenüberliegend ist die Arbeitskammer 5 von einem Arbeitskolben 3 begrenzt, der stirnseitig mit einer Dichtmanschette 26 versehen ist, die an der Wandung der Bohrung 27 anliegt (wie dies Fig. 2 deutlich zeigt) und die den Arbeitskolben 3 gegenüber der Bohrung 27 druckdicht abdichtet.

Der Arbeitskolben 3 ist über ein Drehgelenk 48, 49 mit einer Pleuelstange 47 verbunden, die wiederum an ihrem anderen Ende drehbar mit einem an einer Zahnradscheibe 65 befestigten Exzenter 66 verbunden ist. Die am Außenumfang der Zahnradscheibe 65 ausgebildete Verzahnung 67 greift in eine auf einer Antriebswelle 68 angeordnete Stirnradverzahnung 69 ein. Die Antriebswelle 68 ist mit dem in der Zeichnung nicht dargestellten Rotor eines Elektromotors 70 verbunden, der wiederum von einem Schalter 84 zum Antrieb der Pumpe 63 eingeschaltet werden kann.

Oberhalb des oberen Totpunktes des Arbeitskolbens 3 schließt sich ein seitlicher Gehäuseabschnitt 33 mit einer Auslaßbohrung 8 an, in der ein in Richtung zur Arbeitskammer 5 schließendes Druckventil 10 ausgebildet ist, deren Verschließglied von einer federbelasteten Ventilschließkugel 11 gebildet wird, die in Schließstellung druckdicht an dem zweiten Ventilsitz 34 anliegt, wie dies auch Fig. 2 deutlich zeigt.

An die Auslaßbohrung 8 schließt sich nach Fig. 1 eine Druckleitung 71 an, die mit dem oberen Raum einer Brühkammer 72 verbunden ist. Geringfügig unterhalb des Einlasses 73 der Druckleitung 71 in die Brühkammer 72 ist ein Einlaßsieb 74 eingesetzt, das den oberen Abschnitt der Brühkammer 72 vor Kaffeemehl schützt. Die eigentliche Brühkammer 72 wird vorzugsweise von einem mit einer Handhabe 75 versehenen Siebkorbträger 76 gebildet, der vorzugsweise über einen in der Zeichnung nicht dargestellten Bajonettverschluß mit dem oberen Abschnitt der Brühkammer 72 dichtend verriegelbar ist.

Am Boden 77 des Siebkorbträgers 76 ist ein Auslaßsieb 78 befestigt, das ein Austreten von Kaffeemehl aus der Brühkammer 72 verhindern soll, wenn nach dem Extrahiervorgang der Kaffee aus den am Boden 77 des Siebkorbträgers 76 ausgebildeten Auslässen 79 in ein daruntergestelltes Gefäß 80 abfließt. Wie aus Fig. 1 deutlich ersichtlich ist, dient der zwischen den beiden Sieben 74, 78 gebildete Abschnitt der Brühkammer 72 als Aufnahmeraum für das Kaffeemehl 81.

In Fig. 2 besteht die Kolbenpumpe 63, die vergrößert dargestellt ist, aus einem Gehäuse 1, in dessen unterem Gehäuseabschnitt 29 in einer Bohrung 41 eine Laufbuchse 2 für den Arbeitskolben 3 eingepreßt ist, die härter und verschleißfester als das Kunststoffgehäuse 1 ausgebildet ist. Die Pumpe ist im Gehäuse (nicht dargestellt) einer ebenfalls nicht dargestellten Espressomaschine befestigt. Der Arbeitskolben 3 der Pumpe 63 wird durch einen Kurbel- oder Exzenterantrieb (Fig. 1), dessen Pleuelstange 47 dann mit seiner am Ende ausgebildeten Erweiterung 49 in die am Arbeitskolben 3 ausgebildete Ausnehmung 48 gelenkartig eingreift, hin- und hergehend in der Bohrung 27 der Laufbuchse 2 bewegt.

An der Stirnseite 4 des Arbeitskolbens 3 ist nach Fig. 2 die Dichtmanschette 26 befestigt, die die Arbeitskammer 5 nach unten begrenzt. Koaxial, zumindest jedoch parallel zur Längsachse 28 des Arbeitskolbens 3 bzw. des Gehäuses 1 verläuft eine Einlaßbohrung 6, die die Arbeitskammer 5 mit dem Wassereinlaß 7 verbindet. Der Wassereinlaß 7 wird von einem zylindrisch ausgebildeten oberen Gehäuseabschnitt 30 gebildet, der sich einstückig an den unteren Gehäuseabschnitt 29 anschließt und der am Übergang eine erste Einschnürung 31 aufweist.

Im rechten Winkel zur Einlaßbohrung 6 zweigt nach Fig. 2 eine Auslaßbohrung 8 von der Arbeitskammer 5 ab. Sie verbindet die Arbeitskammer 5 mit einem Wasserauslaß 9, wobei diese Verbindung durch das federbelastete Druckventil 10 gesteuert wird, das in einem seitlich zum Gehäuse 1 verlaufenden Gehäuseabschnitt 33 ausgebildet ist, der über eine zweite Einschnürung 32 in den unteren Gehäuseabschnitt 29, also geringfügig unterhalb der ersten Einschnürung 31, mündet. Das Gehäuse 1 ist vorzugsweise aus POM ausgeformt.

Der von der Arbeitskammer 5 abgewandte Rand der Auslaßbohrung 8 ist hierzu gemäß Fig. 2 als zweiter Ventilsitz 34 ausgebildet, an welchem sich die aus einem Elastomer bestehende Ventilschließkugel 11 federnd abstützt. Die Ventilschließkugel 11 ist in einem Käfig 12 mit mehreren radial zur Auslaßbohrung 8 verlaufenden Schlitzen 35 geführt und wird durch eine Ventilfeder 13 in Richtung des zweiten Ventilsitzes 34 beaufschlagt, welche sich an dem den Wasserauslaß 9 bildenden Endstück 14 abstützt.

Das Endstück 14 ist entweder durch eine dichtende Rast- oder Gewindeverbindung 36 oder durch eine dicht- und kraftschlüssige Schweiß- oder Klebeverbindung mit dem seitlichen Gehäuseabschnitt 33 verbunden. Das Endstück 14 weist einen axial in Richtung auf die Ventilschließkugel 11 verlaufenden Fortsatz 15 auf, welcher der Führung der Ventilfeder 13 dient und welcher mit mehreren radial verlaufenden Schlitzen 38 versehen ist, die zur Durchströmung der Kammer 39, die zwischen der Kugel 11 und dem Endstück 14 ausgebildet ist, dient. Die Bauart des Druckventils 10 ermöglicht eine besonders einfache und kostengünstige Montage.

Die Verbindung zwischen der Arbeitskammer 5 und dem Wassereinlaß 7 wird durch das Saugventil 16 kontrolliert, welches als Tellerventil ausgebildet ist. Hierzu ist der der Arbeitskammer 5 zugewandte Rand der Einlaßbohrung 6 als erster Ventilsitz 40 ausgebildet, an dem der als Ventilteller ausgebildete Ventilschließkörper 17 dichtend anliegt. Der erste Ventilsitz 40 ergibt sich durch die Einschnürung 31 der Gehäusewand im Bereich der Bohrung 41, die bei der Herstellung des einteilig aus Kunststoff geformten Gehäuses 1 mit angeformt wird. Die Dichtfläche des zweiten Ventilsitzes 34 wird im selben Arbeitsgang entsprechend mit ausgeformt.

Auf der vom Arbeitskolben 3 abgewandten Seite ist am Ventilteller 17 ein Ventilschaft 18 angeformt, der die Einlaßbohrung 6 koaxial durchragt und der in einer an der Bohrung 42 des oberen Gehäuseabschnittes 30 angeformten oder eingesetzten, als Hülse ausgebildeten Axialführung 19 gelagert ist. Die Axialführung 19 ist über mehrere gleichmäßig am Umfang verteilte Stege 20 an der Bohrung 42 angebunden.

Der Ventilschließkörper 17 ist mit einer Elastomerschicht 43, die beispielsweise durch Aufspritzen oder Eintauchen aufgebracht wird, beschichtet. Die Elastomerschicht 43 kann aber auch aus einer auf der Oberfläche des Ventilschließkörpers 17 aufgerasteten bzw. aufgespannten Kappe 43 versehen sein, um auch so eine sichere Abdichtung des Ventilschließkörpers 17 gegenüber dem ersten Ventilsitz 40 und einen gedämpften Lauf der Pumpe zu gewährleisten. Die Axialführung 19 sorgt für eine einwandfrei dichtende Dichtfläche zwischen dem ersten Ventilsitz 40 und dem Ventilschließkörper 17 und zentriert das Tellerventil 16 in der Bewegung zum Ventilsitz. Auch die zum Öffnen des Tellerventils 16 nötige Druckdifferenz am Ventilschließkörper 17 wird durch den im Durchmesser großen Ventilsitz 40 verringert, was bei Wahl einer Kugel erhebliche Raumprobleme mit sich bringen würde.

An dem vom Arbeitskolben 3 abgewandten Ende der Axialführung 19 stützt sich mit dem einen Ende eine Ventilfeder 21 ab, deren anderes Ende an einer Abstützplatte 22 angreift. Die Abstützplatte 22 ist mittels einer Rastverbindung am Ventilschaft 18 befestigt und weist zur besseren Durchströmung mehrere Durchlässe 23 auf. Die Rastverbindung wird dadurch erreicht, daß in eine am Ventilschaft 18 ausgebildete Ringnut 44 die innere Wandung 45 der Abstützplatte 22 eingreift. Dies erfolgt dadurch, daß die Abstützplatte 22 auf den am freien Ende des Ventilschaftes 18 ausgebildeten Zapfen 46 soweit aufgeschoben und dabei soweit elastisch aufgeweitet wird, bis die innere Wandung 45 in die Ringnut 44 eingreift und dadurch in axialer Richtung ortsfest auf dem Ventilschaft 18 gelagert ist.

Der Ventilschließkörper 17 hat eine im Querschnitt vorwiegend scheibenförmige Gestalt. Durch die schräg verlaufende Dichtfläche 24 wird stets ein zentrisches Anliegen der Dichtfläche 24 am ersten Ventilsitz 40 gewährleistet und gleichzeitig ein größerer Andruck des Tellerventils 16 am ersten Ventilsitz 40 erreicht. Der Ventilschließkörper 17 weist eine der Dichtmanschette 26 gegenüberliegende Vertiefung 50 auf, die zu einer Gewichtsreduzierung und somit aufgrund der geringeren Trägheitsmasse auch zu einem schneller ansprechenden Tellerventil 16 führt und die die Herstellung des mit dem Ventilschaft 18 verbundenen Tellerventils 16 aufgrund der Vermeidung von Materialanhäufungen beim Spritzvorgang verbessert.

Die Wirkungsweise der erfindungsgemäßen Pumpe im Einsatz einer Espressomaschine ist folgende:

Nachdem nach Fig. 1 ausreichend kaltes Wasser in den offenen Kessel 54 nach Öffnen des Deckels 53 eingegossen wurde, kann die Stromversorgung für die Heizeinrichtung 58 durch Schließen des Schalters 61 eingeschaltet werden. Da sich der Thermostat 59 aufgrund der noch kalten Wassertemperatur in seiner geschlossenen Stellung befindet, fließt Strom durch die Heizeinrichtung 58 und diese erhitzt sich dabei. Die von der Heizeinrichtung 58 über das Dampfrohr 57 an den Boden 56 und die Wandung des Kessels 54 abgegebene Wärme erhitzt das im Kessel 54 befindliche Wasser zügig, bis dieses die zum Brühen von Kaffee oder Espresso erforderliche Temperatur erreicht hat und der Thermostat 59 die Stromverbindung zur Heizeinrichtung 58 unterbricht. Ein in der Zeichnung nicht dargestellter Regelknopf kann zur Verstellung des Thermostaten und somit zur Einstellung der gewünschten Wassertemperatur bedient werden, denn für die Zubereitung von Kaffee wird eine etwas niedrigere Temperatur als für Espresso benötigt. Sobald der mit Kaffeemehl 81 gefüllte Siebkorbträger 76 in die Siebkorbhalteeinrichtung des Brühkopfes 82 dichtend eingesetzt wurde, ist das Kaffeemehl 81 in der so gebildeten Brühkammer 72 zwischen den Sieben 74, 78 eingeschlossen. Wird nun der Schalter 84 zum Betrieb des Elektromotors 70 eingeschaltet, so treibt der Elektromotor 70 über die Antriebswelle 68 das Zahnritzel 69 an, das über eine mit ihm in Zahneingriff stehende Zahnradscheibe 65 einen Exzenter 66 rotierend antreibt, mit der die an der anderen Seite mit dem Arbeitskolben 3 verbundene Pleuelstange 47 in Antriebsverbindung steht.

Fährt nun der Arbeitskolben 3 gemäß Fig. 2 in Pfeilrichtung X vom oberen in der Zeichnung dargestellten Totpunkt nach unten, so bildet sich aufgrund der zunächst durch die Ventile 10, 16 nach außen hin geschlossenen Arbeitskammer 5 in dieser ein Unterdruck, der solange ansteigt, bis die durch den Unterdruck in Richtung X auf den Ventilschließkörper 17 ausgeübte Kraft größer wird, als die in Richtung Y wirkende Kraft, die durch die auf den Ventilschaft 18 einwirkende vorgespannte Ventilfeder 21 erzeugt wird. Die in Richtung X wirkende Kraft entsteht durch den auf die Kreisfläche des Tellerventils 16 wirkenden Unterdruck. Die Kreisfläche wird durch die Projektion in X-Richtung gebildet, wobei der Durchmesser des Kreises von der Berührungslinie der Dichtfläche 40 gebildet wird.

Sobald also die am Tellerventil 16 in Richtung X angreifende Saugkraft größer ist als die in Richtung Y wirkende Kraft der Ventilfeder 21, hebt der Ventilschließkörper 17 vom ersten Ventilsitz 40 ab und es wird heißes Wasser aus dem Kessel 54 über die Ausgangsleitung 64 zum Wassereinlaß 7 und von dort über das Saugventil 16 in die Arbeitskammer 5 eingesaugt. Durch den verhältnismäßig geringen Unterdruck, der zum Öffnen des Saugventils 16 nötig ist, wird das sehr heiße, aber noch nicht kochende Wasser, nicht zum Sieden gebracht, so daß eine unerwünschte Dampfblasenbildung (Kavitation) vermieden, wodurch die Pumpleistung verbessert wird. Dies wird zum einen durch die lang bauende und somit weiche Ventilfeder 21 und zum anderen durch die große Kreisfläche am Ventilschließkörper 17 erreicht.

Sobald der Arbeitskolben 3 nach Fig. 2 seinen unteren Totpunkt (nicht dargestellt) erreicht hat und wieder nach oben fährt, schließt das Saugventil 16 und das Druckventil 10 hebt mit seiner Ventilschließkugel 11 vom zweiten Ventilsitz 34 ab, allerdings erst dann, wenn die in Richtung auf die Ventilschließkugel 11 wirkende Vorspannkraft der Ventilfeder 13 durch den Druck in der Arbeitskammer 5 überwunden wurde. Da Wasser nicht kompressibel ist, entsteht bereits bei einem geringen Hub des Arbeitskolbens 3 in Richtung zum Saugventil 16 sehr schnell an der Ventilschließkugel 11 ein Überdruck, durch den diese auch bei einem verhältnismäßig kleinen Durchmesser des zweiten Ventilsitzes 34 von diesem abhebt und das Druckventil 10 öffnet.

Das heiße Wasser wird nun nach den Figuren 1 und 2 über den Wasserauslaß 9 und eine anschließende Druckleitung 71 zum Einlaß 73 gefördert, von wo es über das Einlaßsieb 74 in die Brühkammer 72 gedrückt wird, in der sich das Kaffeemehl 81 befindet. Nun wird das heiße Wasser unter Druck durch das Kaffeemehl gepreßt, sodaß die im Kaffeemehl befindlichen Geschmacks- und Aromastoffe extrahiert werden. Nach der Extrahierung fließt das Extrakt durch die im Auslaßsieb 78 ausgebildeten Sieblöcher 83, wo es über ein oder zwei Austrittsöffnungen 79 in ein darunter abgestelltes Gefäß 80, beispielsweise eine Espressotasse, abfließen kann.

Hat der Arbeitskolben 3 seinen in den Zeichnungen oberen Totpunkt wieder erreicht, so legt sich die Ventilschließkugel 11 infolge der Einwirkung der Kraft der Ventilfeder 13 wieder an dem zweiten Ventilsitz 34 an und die Arbeitskammer 5 ist wieder völlig verschlossen. Es folgt nun ein neuer Arbeitshub, der wieder entsprechend der oben beschriebenen Arbeitsweise abläuft.

Die Dichtmanschette 26 liegt mit ihrer umlaufenden Dichtlippe 51 an der Innenwandung der Laufbuchse 2 so dichtend an, daß die Pumpe 63 auch selbstansaugend Wasser fördern kann, wenn der Kessel 54 mit seiner Ausgangsleitung 62 tiefer liegt, als der Wassereinlaß 7 der Pumpe 63. Und dies insbesondere auch aufgrund der bereits frühzeitigen Öffnung des Saugventils 16, da in dem Wassereinlaß 7 somit ein ausreichendes Vakuum entstehen kann, dessen Höhe zum Selbstansaugen von Wasser ausreicht.

Das Druckventil 10 ist so ausgelegt, daß eine einwandfreie Entlüftung der Arbeitskammer 5 möglich ist, d.h., die Ventilschließkugel 11 öffnet auch in der Kompressionsphase des Arbeitskolbens 3, wenn dieser nur Luft in der Arbeitskammer 5 komprimiert. Insbesondere dann, wenn die Zuleitungen 62, 7, 9, 63, 71, 73 vom Kessel 54 zur Brühkammer 72 möglichst kurz und wärmeisoliert sind, treten Temperaturverluste des Wassers auf dem Weg vom Kessel 54 über die Pumpe 63 zur Brühkammer 72 nahezu nicht auf, so daß das Brühwasser stets die für die Herstellung eines Kaffeegetränkes erforderliche Temperatur einhält, gleichgültig, ob einerseits eine oder mehrere Tassen zubereitet werden und andererseits der Mahl- und Stopfgrad unterschiedlich sind.

## Patentansprüche

1. Haushaltsespressomaschine mit einer Heizeinrichtung (58) zum Erhitzen von Wasser für die Herstellung eines Kaffeegetränks mit einer elektrisch angetriebenen Pumpe (63) zum Fördern des erhitzten Wassers, in deren Gehäuse (1) eine Bohrung (27) ausgebildet ist, in der ein Arbeitskolben (3) hin- und herbewegt wird und durch seinen Hub eine Arbeitskammer (5) festlegt und mit einem Saug- (16) und einem Druckventil (10), die jeweils in Schließrichtung einen federbelasteten Ventilschließkörper (17) bzw. (11) enthalten, wobei das Saugventil (16) durch Unterdruck und das Druckventil (10) durch Überdruck in der Arbeitskammer (5) geöffnet werden und wobei die Herstellung des Kaffeegetränks dadurch erfolgt, daß Wasser von der Pumpe (63) über das Saugventil (16) angesaugt und über das Druckventil (10) unter Druck einer mit Kaffeemehl (81) befüllbaren Brühkammer (72) zugeführt wird, aus der es nach Extraktion abfließt,
**dadurch gekennzeichnet**,
daß das heiße Wasser von der Heizeinrichtung (58) bis auf die für die Herstellung des Espressogetränks optimale Temperatur von 93° C bis 97° C, vorzugsweise zwischen 95° C und 97° C aufgeheizt wird und daß das Saugventil (16) als Tellerventil ausgebildet ist.

2. Haushaltsespressomaschine nach Anspruch 1,
**dadurch gekennzeichnet**,
daß das Tellerventil (16) auf seiner vom Arbeitsraum (5) abgewandten Seite einen Ventilschaft (18) aufweist, der in eine Axialführung (19) eingreift und daß das Tellerventil (16) einen Ventilschließkörper (17) aufweist, der in der Arbeitskammer (5) ausgebildet ist.

3. Haushaltsespressomaschine nach Anspruch 2,
**dadurch gekennzeichnet**,
daß an dem Ventilschaft (18) eine Abstützplatte (22) für eine Ventilfeder (21) befestigt ist und daß die Abstützplatte (22) mit Durchlässen (23) versehen ist.

4. Haushaltsespressomaschine nach Anspruch 3,
**dadurch gekennzeichnet,**
daß die Ventilfeder (21) zwischen der Axialführung (19) und der Abstützplatte (22) eingespannt ist.

5. Haushaltsespressomaschine nach Anspruch 2,
**dadurch gekennzeichnet,**
daß das Tellerventil (16) aus heißwasserbeständigem Kunststoff, vorzugsweise Polyamid, besteht und daß der Ventilschließkörper (17) mit einer heißwasserbeständigen elastomeren Beschichtung, beispielsweise Silikon oder EPDM, beschichtet ist.

6. Haushaltsespressomaschine nach Anspruch 1,
**dadurch gekennzeichnet,**
daß auf dem Ventilschließkörper (17) eine Kappe (43) aus einem Elastomer, vorzugsweise EPDM oder Nitrilbutadiengummi (NBR) aufgespannt ist.

7. Haushaltsespressomaschine nach Anspruch 1,
**dadurch gekennzeichnet,**
daß der Einlaßquerschnitt am geöffneten Tellerventil (16) zu dem Auslaßquerschnitt am geöffneten Druckventil (10) ein Verhältnis von etwa 4:1 bildet und daß der Durchmesser des Arbeitskolbens (3) etwa 8 mm bei einem Hub von etwa 5 mm beträgt.

8. Haushaltsespressomaschine nach Anspruch 1,
**dadurch gekennzeichnet,**
daß das Druckventil (10) einen Ventilschließkörper (11) aufweist, der von einer Kugel gebildet wird.

9. Haushaltsespressomaschine nach Anspruch 8,
**dadurch gekennzeichnet,**
daß die Kugel (11) aus einem heißwasserbeständigen Elastomer, vorzugsweise aus Silikon oder EPDM besteht.

10. Haushaltsespressomaschine nach Anspruch 1,
**dadurch gekennzeichnet,**
daß das Gehäuse (1) aus Kunststoff hergestellt ist und daß die Ventilsitze (34, 40) durch an dem Gehäuse (1) konzentrisch verlaufende Einschnürungen (32, 31) gebildet werden.

11. Haushaltsespressomaschine nach Anspruch 10,
**dadurch gekennzeichnet,**
daß das Gehäuse (1) aus heißwasserbeständigem Polyacetal, vorzugsweise POM (Polyoxymethylen), gespritzt ist.

12. Haushaltsespressomaschine nach Anspruch 1,
**dadurch gekennzeichnet,**
daß der Arbeitskolben (3) mit einer Pleuelstange (47) verbunden ist, die über eine Exzenterbetätigung (66) und ein Getriebe (65, 69) von einem Elektromotor (70) angetrieben wird.

13. Haushaltsespressomaschine nach Anspruch 1,
**dadurch gekennzeichnet,**
daß der Arbeitskolben (3) durch magnetische Induktion angetrieben wird.

## Claims

1. A domestic espresso maker with a heating device (58) for heating water for producing a coffee drink, with an electrically powered pump (63) for the delivery of the heated water, said pump comprising a pump casing (1) having a bore (27) therein in which a working piston (3) reciprocates and determines with its stroke a working chamber (5), said pump further comprising a suction valve (16) and a discharge valve (10) each comprising a valve closure body (17 and, respectively, 11) spring-loaded in a closing direction, the suction valve (16) being opened by pressure in the working chamber (5) that is below atmospheric and the discharge valve (10) being opened by pressure in the working chamber (5) that is above atmospheric, wherein preparation of the coffee drink is accomplished by the pump (63) drawing water through the suction valve (16) and delivering it under pressure through the discharge valve (10) to a brewing chamber (72) adapted to be filled with coffee grinds (81) from which it escapes following extraction,
**characterized in that** the heating device (58) heats the water to a temperature optimum for preparing the espresso beverage, which is between 93°C and 97°C, preferably between 95°C and 97°C, and that the suction valve (16) is configured as a poppet valve.

2. The domestic espresso maker as claimed in claim 1,
**characterized in that** the poppet valve (16) has at its end remote from the working chamber (5) a valve stem (18) engaging in an axial guideway (19), said poppet valve (16) further including a valve closure body (17) that is received in the working chamber (5).

3. The domestic espresso maker as claimed in claim 2,
**characterized in that** a support plate (22) for a valve spring (21) is secured to the valve stem (18), and that the support plate (22) is provided with passageways (23).

4. The domestic espresso maker as claimed in claim 3,
**characterized in that** the valve spring (21) is clamped in place between the axial guideway (19) and the support plate (22).

5. The domestic espresso maker as claimed in claim 2,
**characterized in that** the poppet valve (16) is made of a hot-water resistant plastics material, preferably polyamide, and that the valve closure body (17) is coated with a hot-water resistant layer of an elastomeric material, for example, silicone or EPDM.

6. The domestic espresso maker as claimed in claim 1,
**characterized in that** the valve closure body (17) has a cap (43) fitted thereon which is made of an elastomeric material, preferably EPDM or nitrile butadiene rubber (NBR).

7. The domestic espresso maker as claimed in claim 1,
**characterized in that** a ratio of the inlet cross-section on the open poppet valve (16) to the outlet cross-section on the open discharge valve (10) is about 4 to 1, and the working piston (3) has a diameter of about 8 mm with a stroke length of about 5 mm.

8. The domestic espresso maker as claimed in claim 1,
**characterized in that** the discharge valve (10) has a valve closure body (11) that is formed by a ball.

9. The domestic espresso maker as claimed in claim 8,
**characterized in that** the ball (11) is made of a hot-water resistant elastomer, preferably silicone or EPDM.

10. The domestic espresso maker as claimed in claim 1,
**characterized in that** the casing (1) is made of a plastics material and the valve seats (34, 40) are formed by neckings (32, 31) extending concentrically on the casing (1).

11. The domestic espresso maker as claimed in claim 10,
**characterized in that** the casing (1) is injection-molded of hot-water resistant polyacetal, preferably POM (polyoxymethylene).

12. The domestic espresso maker as claimed in claim 1,
**characterized in that** the working piston (3) is connected with a connecting rod (47) driven by an electric motor (70) through an eccentric (66) and a gearing (65, 69).

13. The domestic espresso maker as claimed in claim 1,
**characterized in that** the working piston (3) is driven by magnetic induction.

## Revendications

1. Machine à expresso de ménage comprenant un dispositif de chauffage (58) servant à chauffer l'eau à la température nécessaire pour la production d'une boisson de café et une pompe (63) entraînée électriquement pour le transport de l'eau ainsi chauffée, dans le corps (1) de laquelle est ménagé un alésage (27) dans lequel un piston de travail (3) est mis en mouvement alternatif et détermine, par sa course une chambre de travail (5), et un clapet d'aspiration (16) et un clapet de refoulement (10) dont chacun renferme un corps obturateur de clapet (17) ou (11) respectivement, chargé par ressort dans le sens de la fermeture, le clapet d'aspiration (16) s'ouvrant sous l'action d'une dépression de la chambre de travail (5) et le clapet de refoulement (10) par une surpression de la chambre de travail (5), et la production de la boisson de café s'effectuant par le fait que de l'eau est aspirée par la pompe (63) à travers le clapet d'aspiration (16) est envoyée sous pression, à travers le clapet de refoulement (10), à une chambre d'infusion (72) qui peut être remplie de café moulu (81), d'où l'eau s'écoule après l'extraction,
caractérisée
en ce que l'eau chaude est chauffée par le dispositif de chauffage (58) à la température optimale pour la production de la boisson expresso, qui est de 93°C à 97°C et de préférence comprise entre 95°C et 97°C et en ce que le clapet d'aspiration (16) est constitué par un clapet à plateau.

2. Machine à expresso de ménage selon la revendication 1,
caractérisée
en ce que le clapet à plateau (16) présente, sur sa face qui est éloignée de la chambre de travail (5), une tige de clapet (18) qui est engagée dans un guide axial (19) et en ce que le clapet à plateau (16) présente un élément obturateur de clapet (17) qui est formé dans la chambre de travail (5).

3. Machine à expresso de ménage selon la revendication 2,
caractérisée
en ce qu'à la tige de clapet (18) est fixée une plaque de portée (22) pour donner appui à un ressort de clapet (21) et en ce que la plaque de portée (22) est munie de passages traversants (23).

4. Machine à expresso de ménage selon la revendication 3,
caractérisée
en ce que le ressort de clapet (21) est tendu entre le guide axial (19) et la plaque de portée (22).

5. Machine à expresso de ménage selon la revendication 2,
caractérisée
en ce que le clapet à plateau (16) est composé d'une matière plastique résistante à l'eau chaude, de préférence d'une polyamide, et en ce que l'élément obturateur de clapet (17) est revêtu d'un revêtement élastomère, résistant à l'eau chaude, par exemple de silicone ou de EPDM.

6. Machine à expresso de ménage selon la revendication 1,
caractérisée
en ce qu'un capuchon (43) en élastomère, de préférence en EPDM ou en caoutchouc nitrile butadiène (NBR) est tendu sur l'élément obturateur de clapet (17).

7. Machine à expresso de ménage selon la revendication 1,
caractérisée
en ce que la section d'entrée au droit du clapet à plateau (16) ouvert est dans un rapport d'environ 4:1 avec la section de sortie au droit du clapet de refoulement (10) ouvert, et en ce que le diamètre du piston de travail (3) est d'environ 8 mm, avec une course d'environ 5 mm.

8. Machine à expresso de ménage selon la revendication 1,
caractérisée
en ce que le clapet de refoulement (10) présente un élément obturateur de clapet (11) qui est formé par une bille.

9. Machine à expresso de ménage selon la revendication 8,
caractérisée
en ce que la bille (11) est composée d'un élastomère résistant à l'eau chaude, de préférence de silicone ou de EPDM.

10. Machine à expresso de ménage selon la revendication 1,
caractérisée
en ce que le corps (1) est fabriqué en matière plastique et les sièges de clapets (34, 40) sont formés par des étranglements (32, 31) s'étendant concentriquement au corps (1).

11. Machine à expresso de ménage selon la revendication 10,
caractérisée
en ce que le corps (1) est moulé par injection en polyacétal résistant à l'eau chaude, de préférence en POM (polyoxyméthylène).

12. Machine à expresso de ménage selon la revendication 1,
caractérisée
en ce que le piston de travail (3) est relié à une bielle (47) qui est entraînée par un moteur électrique (70) par l'intermédiaire d'un dispositif à excentrique (66) et d'un mécanisme (65, 69).

13. Machine à expresso de ménage selon la revendication 1,
caractérisée
en ce que le piston de travail (3) est entraîné par induction magnétique.
